**Europäisches Patentamt**

**European Patent Office**

**Office européen des brevets**

(19)

(11) Veröffentlichungsnummer : **0 344 589 B1**

(12) # EUROPÄISCHE PATENTSCHRIFT

(45) Veröffentlichungstag der Patentschrift :
**29.07.92 Patentblatt 92/31**

(51) Int. Cl.$^5$ : **C09J 133/00,** C08F 20/02,
C08F 2/10

(21) Anmeldenummer : **89109324.7**

(22) Anmeldetag : **24.05.89**

Die Akte enthält technische Angaben, die nach
dem Eingang der Anmeldung eingereicht
wurden und die nicht in dieserPatentschrift
enthalten sind.

(30) Priorität : **31.05.88 DE 3818425**

(43) Veröffentlichungstag der Anmeldung :
**06.12.89 Patentblatt 89/49**

(45) Bekanntmachung des Hinweises auf die
Patenterteilung :
**29.07.92 Patentblatt 92/31**

(84) Benannte Vertragsstaaten :
**AT BE CH DE ES FR GB IT LI NL SE**

(56) Entgegenhaltungen :
**FR-A- 2 208 961**
**US-A- 3 763 117**

(56) Entgegenhaltungen :
**WPI, FILE SUPPLIER, AN-Nr. 76-15879X, Derwent Publications Ltd, Londen, GB; & JP-A-51
005 337 (NIPPON SYNTHETIC CHEM.K.K.)
17-01-1976
CHEMICAL ABSTRACTS, Band 88, Nr. 22, 29.
Mai 1978, Seite 59, Zusammenfassung Nr.
153856a, Columbus, Ohio, US; & JP-A-7742 831
(TORAY NDUSTRIES, INC.) 26-10-1977**

(73) Patentinhaber : **BASF Aktiengesellschaft
Carl-Bosch-Strasse 38
W-6700 Ludwigshafen (DE)**

(72) Erfinder : **Penzel, Erich, Dr.
Carl-Bosch-Strasse 86
W-6700 Ludwigshafen (DE)**
Erfinder : **Keller, Roland, Dr.
Adelsheimer Strasse 15
W-6800 Mannheim 51 (DE)**
Erfinder : **Peters, Karl-Clemens, Dr.
Otto-Schmidt-Gross-Strasse 4
W-6702 Bad Duerkheim (DE)**

(54) **Verwendung von wasserlöslichen Polymerisaten als Klebstoff.**

## Beschreibung

Flächigen Verbundmaterialien kommt insbesondere in der Verpackungsindustrie eine große Bedeutung zu. Darunter sind vor allem feste Verbunde von flächigen Materialien zu verstehen, z.B. Verbunde von mindestens 2 Folien aus Kunststoffen, Verbunde von Kunststoff-Folien mit Metallfolien oder mit Papier. Durch den Verbund von zwei verschiedenen Materialien werden deren Eigenschaften kombiniert, so daß die Verbundstoffe Eigenschaften aufweisen, die auf andere Weise nicht oder nur schwer zu erreichen sind. Beispielsweise haben die Verbundmaterialien gegenüber den einzelnen Bestandteilen eine höhere mechanische oder thermische Stabilität, bessere Siegelbarkeit oder ein stark vermindertes Durchgangsvermögen für Gase, insbesondere für Sauerstoff.

Die Verbundmaterialien werden üblicherweise auf Kaschiermaschinen hergestellt, die mit Geschwindigkeiten von 50 bis 200 m pro Minute arbeiten. Hierbei wird z.B. auf einer Basisfolie zunächst ein Kleber aufgetragen und danach die Deckfolie appliziert. Als Kleber wurden lösemittelhaltige Kaschierklebstoffe verwendet, die aus Gründen des Umweltschutzes und der Arbeitssicherheit inzwischen durch andere Klebstoffe abgelöst worden sind. Hierbei hat man zunächst versucht, als Klebstoffe lösemittelfreie Produkte, die sogenannten "High-Solid"-Klebstoffe zu verwenden. Nachteilig war dabei jedoch die hohe Viskosität der Produkte, die einen gleichmäßigen Auftrag bei der Verarbeitung erschwerte.

Andere Kleber, wie lösungsmittelfreie Einkomponenten-Polyurethan-Klebstoffe, hatten zwar diese Nachteile nicht, konnten sich aber dennoch nicht durchsetzen, weil damit nur schwer reproduzierbare Verbundeigenschaften erzielbar waren.

Eine andere Gruppe von Klebern zur Herstellung von Verbundmaterialien sind Zwei-Komponenten-Polyurethan-Klebstoffe, die entweder kalt oder heiß verarbeitet werden. Bei dieser Klasse von Klebern werden Isocyanatgruppen tragende Substanzen mit Polyolen in Gegenwart von Katalysatoren zur Reaktion gebracht. Die Verwendung dieser Klebstoffe auf den herkömmlichen Kaschiermaschinen bereitet jedoch Schwierigkeiten, weil die Kaschiermaschinen üblicherweise nicht für den Einsatz von Zwei-Komponenten-Systemen ausgerüstet sind. Ein weiterer Nachteil dieser Klasse von Klebstoffen besteht darin, daß die Eigenschaften, die man bei der Verwendung von lösemittelhaltigen Klebstofen erhält, nicht immer erreicht werden. Hinzu kommt noch, daß der Verbund erst nach mehreren Tagen die endgültige Festigkeit erreicht, wenn nämlich die Reaktion zwischen Isocyanatgruppen und Polyolen vollständig abgelaufen ist.

Zur Herstellung von flächigen Verbundmaterialien werden außer den bereits genannten auch wäßrige Kaschierkleber auf Basis von Polymerdispersionen eingesetzt. Von besonderem Interesse sind wäßrige Dispersionen auf Basis von Polyvinylidenchlorid. Die mit solchen Dispersionen hergestellten Folienverbunde weisen aufgrund des hohen Gehalts an einpolymerisiertem Vinylidenchlorid im Copolymerisat der Kleberschicht eine hohe Sperrwirkung gegenüber Gasen, Feuchtigkeit und Aromastoffen auf. Die bisher als Kaschierkleber verwendeten wäßrigen Dispersionen auf Basis von Polyvinylidenchlorid ergeben jedoch nur bei bestimmten Folienarten gute Ergebnisse. Kleber dieser Art haben auf Polyolefinfolien häufig nur eine unzureichende Haftfestigkeit, so daß die Verbunde von Polyolefinfolien mit diesen Klebern bereits per Hand aufgetrennt werden können. Wäßrige Dispersionen auf Basis von Polyvinylidenchlorid, die eine verbesserte Verbundfestigkeit von Folien ergeben, führen jedoch zu Verbunden, die schlechtere Barriereeigenschaften haben.

Aus der US-PS 4 491 650 sind Copolymerisate aus Hydroxyethylacrylaten oder Hydroxyalkylmethacrylaten und Alkylacrylaten oder Alkylmethacrylaten bekannt. Sie haben ein Molekulargewicht von 1.000 bis 100.000 und werden mit Isocyanatgruppen enthaltenden Alkoxysilanen umgesetzt. Die dabei erhältlichen Umsetzungsprodukte werden in Form von Lösungen in einem organischen Lösemittel als Beschichtungsmittel verwendet.

Die Erfindung liegt die Aufgabe zugrunde, einen Klebstoff, insbesondere einen Kaschierkleber zur Verfügung zu stellen, der eine gute Haftung auf Folien aus Kunststoffen aufweist und den Verbunden eine hohe Sperrwirkung gegen den Durchgang von Gasen verleiht.

Die Aufgabe wird erfindungsgemäß gelöst durch Verwendung von elektrolytarmen wäßrigen Lösungen wasserlöslicher Polymerisate, die durch Lösungspolymerisation von

(a) 100 bis 50 Gew.% Acrylsäure, Methacrylsäure, Hydroxyethylacrylat, Hydroxypropylacrylat oder deren Mischungen und

(b) 0 bis 50 Gew.% anderen, mit den Monomeren (a) copolymerisierbaren monoethylenisch ungesättigten Verbindungen

in wäßrigem Medium in Gegenwart von Radikale bildenden Polymerisationsinitiatoren bei pH-Werten von 1 bis 6 erhältlich sind und die einmittleres Molekulargewicht (Gewichtsmittel) von 5 000 bis 600 000 und Glastemperaturen von -34 bis +26°C haben (bestimmt in Anlehnung an ASTM-D 3418-82 bei einer Aufheizgeschwindigkeit von 20°C/min nach dem ersten Aufheizen, wobei der Wendepunkt angegeben wurde), als Kaschierkleber zur Herstellung von flächigen Verbundmaterialien.

2

Bei den erfindungsgemäß zu verwendenden wasserlöslichen Polymerisaten kann es sich entweder um Homopolymerisate von Monomeren der Gruppe (a) handeln, nämlich um Homopolymerisate der Acrylsäure, Methacrylsäure, des Hydroxyethylacrylats, des Hydroxypropylacrylats oder um Copolymerisate aus den Monomeren der Gruppe (a), z.B. Copolymerisate aus Acrylsäure und Methacrylsäure, Copolymerisate aus Acrylsäure und Hydroxylethylacrylat, Copolymerisate aus Acrylsäure und Hydroxypropylacrylat, Copolymerisate aus Acrylsäure, Methacrylsäure und Hydroxylethylacrylat, Copolymerisate aus Acrylsäure, Methacrylsäure, Hydroxylethylacrylat und Hydroxylpropylacrylat. Diese Copolymerisate können die Monomeren in jedem beliebigen Verhältnis einpolymerisiert enthalten.

Außerdem kommen Copolymerisate in Betracht, die mindestens ein Monomer der Gruppe (a) und mindestens ein Monomer der Gruppe (b), d.h. andere, mit den Monomeren (a) copolymerisierbare monoethylenisch ungesättigte Verbindungen einpolymerisiert enthalten. Verbindungen der Gruppe (b) sind beispielsweise die Ester der Acrylsäure mit einem einwertigen $C_1$- bis $C_4$-Alkohol, wie Methylacrylat, Ethylacrylat, n-Propylacrylat, Isopropylacrylat, n-Butylacrylat, Isobutylacrylat und tert.-Butylacrylat, die entsprechenden Ester der Methacrylsäure mit einem einwertigen $C_1$- bis $C_4$-Alkohol, insbesondere Methylmethacrylat und Ethylmethacrylat, sowie Vinylacetat, Vinylpropionat, Acrylamid, Methacrylamid, Acrylnitril, Methacrylnitril, N-Methylolacrylamid, $C_1$- bis $C_4$-Alkylether von N-Methylolacrylamid, N-Methylolmethacrylamid, $C_1$- bis $C_4$-Alkylether von N-Methylolmethacrylamid, 2-Acrylamido-2-methylpropansulfonsäure, Vinylsulfonsäure, Sulfoethylmethacrylat und Mischungen der genannten Monomeren. Falls die Monomeren der Komponente (b) zur Herstellung der wasserlöslichen Polymerisate eingesetzt werden, so beträgt ihr Anteil am Aufbau der Copolymerisate bis zu 50 Gew.%. Der Anteil dieser Monomeren am Copolymerisat richtet sich danach, daß die entstehenden Polymerisate noch im wäßrigem Medium löslich sind. Als wasserlöslich werden die Polymerisate im Sinne der vorliegenden Erfindung angesehen, sofern man bei einer Temperatur von 20°C davon 5 gew.%ige wäßrige Lösungen herstellen kann. Die sauren Gruppen der Copolymerisate können partiell neutralisiert sein, z.B. bis zu 75 %.

Geeignet sind beispielsweise Copolymerisate aus Acrylsäure und Acrylamid, Copolymerisate aus Acrylsäure und Methacrylamid, die vorzugsweise bis zu 30 Gew.% Methacrylamid oder Acrylamid einpolymerisiert enthalten, Copolymerisate aus Methacrylsäure und Acrylamid, Copolymerisate aus Methacrylsäure und Methacrylamid, Copolymerisate aus Hydroxyethylacrylat und Acrylamid, Copolymerisate aus Hydroxyethylacrylat und Methacrylamid, Copolymerisate aus Hydroxyethylacrylat und Methylacrylat, Copolymerisate aus Hydroxymethylacryl und Ethylacrylat, Copolymerisate aus Hydroxyethylacrylat und n-Butylacrylat, Copolymerisate aus Hydroxyethylacrylat, n-Butylacrylat und Acrylsäure, Copolymerisate aus Hydroxyethylacrylat und Vinylpropionat oder Vinylacetat, Copolymerisate aus Hydroxyethylacrylat und Acrylnitril, Copolymerisate aus Hydroxyethyacrylat, Acrylnitril und Acrylsäure, Copolymerisate aus Acrylsäure und Methylacrylat, die bis maximal 30 Gew.% Methylacrylat einpolymerisiert enthalten, Copolymerisate aus Acrylsäure, Acrylamid und Methylacrylat, sowie folgende Copolymerisate, die die jeweils angegebenen Monomeren in einpolymerisierter Form enthalten:

Copolymerisate aus 90 Gew.% Hydroxyethylacrylat, 5 Gew.% Methacrylsäure und 5 Gew.% Vinylpropionat, Copolymerisate aus 90 Gew.% Hydroxyethylacrylat, 5 Gew.% Acrylamid und 5 Gew.% Methylmethacrylat, Copolymerisate aus 95 Gew.% Hydroxyethylacrylat und 5 Gew.% Acrylnitril, Copolymerisate aus 85 Gew.% Hydroxyethylacrylat, 5 Gew.% Acrylsäure, 5 Gew.% Acrylamid und 5 Gew.% Vinylacetat, Copolymerisate aus 10 Gew.% Hydroxyethylacrylat, 75 Gew.% Acrylsäure, 5 Gew.% Ethylacrylat und 10 Gew.% Vinylacetat, Copolymerisate aus 10 Gew.% Hydroxyethylacrylat, 80 Gew.% Acrylsäure und 10 Gew.% Methylacrylat, Copolymerisate aus 10 Gew.% Hydroxyethylacrylat, 75 Gew.% Acrylsäure und 5 Gew.% Acrylnitril, Copolymerisate aus 40 Gew.% Hydroxyethylacrylat, 40 Gew.% Acrylsäure, 10 Gew.% Acrylamid und 10 Gew.% Methylacrylat, Copolymerisate aus 50 Gew.% Hydroxyethylacrylat, 25 Gew.% Acrylsäure und 25 Gew.% Vinylacetat, Copolymerisate aus 10 Gew.% Hydroxyethylacrylat, 80 Gew.% Acrylsäure und 10 Gew.% Methylacrylat.

Vorzugsweise verwendet man als Klebemittel Lösungspolymerisate von (a) Hydroxyethylacrylat, Acrylsäure, Methacrylsäure oder deren Mischungen und (b) Methylacrylat, Ethylacrylat, Vinylacetat, Vinylpropionat, Acrylamid, Acrylnitril oder deren Mischungen als Kleber. Besonders bevorzugt sind wasserlösliche Copolymerisate aus Hydoxyethylacrylat und Acrylsäure oder aus Hydroxyethylacrylat, Acrylsäure und einem Monomer aus der Gruppe Acrylnitril, Ethylacrylat, Methylacrylat, Methylmethacrylat, Acrylamid, Methacrylamid und Vinylacetat.

Die wasserlöslichen Homo- oder Copolymerisate werden durch Lösungspolymerisation der oben beschriebenen Monomeren in wäßrigem Medium, ggf. in Mischungen aus Wasser mit eimuertigen $C_1$- bis $C_4$-Alkoholen, Tetrahydrofuran, Dioxan, Aceton hergestellt. Geeignete Alkohole sind beispielsweise Methanol, Ethanol, n-Propanol, Isopropanol, n-Butanol, sec.-Butanol und tert.-Butanol. Es ist selbstverständlich auch möglich, Mischungen aus Wasser und Isopropanol, Wasser und n-Butanol oder sec.-Butanol, Wasser und Aceton, Wasser und Tetrahydrofuran, sowie Mischungen aus Wasser, Isopropanol und Dioxan einzusetzen. Die Polymerisation er-

EP 0 344 589 B1

folgt in Gegenwart von Radikale bildenden Polymerisationsinitiatoren.

Als Polymerisationsinitiatoren eignen sich beispielsweise Alkaliperoxidisulfate oder deren Mischungen, Wasserstoffperoxid, Azoverbindungen, wie 2,2′-Azobis-(2-amidinopropan)hydrochlorid, und Redox-Katalysatoren, z.B. Mischungen aus Alkaliperoxidisulfaten und wasserlöslichen Reduktionsmitteln, wie Ascorbinsäure, Natriumsulfit und Anlagerungsprodukten von Natriumsulfit an Formaldehyd. Gegebenenfalls kann bei den Redox-Katalysatoren die Mitverwendung von Schwermetallsalzen, z.B. Eisen-II-Sulfat, vorteilhaft sein.

Die Polymerisationstemperatur kann innerhalb eines weiten Bereiches variiert werden, z.B. zwischen 20 und 200°C. Sofern bei Temperaturen oberhalb des Siedepunkt des wäfrigen Mediums gearbeitet wird, polymerisiert man die Monomeren unter erhöhtem Druck. Besonders bevorzugt werden solche wasserlöslichen Polymerisate als Kleber verwendet, die durch Lösungspolymerisation in wäßrigem Medium bei pH-Werten von 1,0 bis 6 erhältlich sind. Die Konzentration der Monomeren in einem Lösemittel während der Polymerisation kann ebenfalls in weiten Bereichen variiert werden, z.B. zwischen 5 und 50 %. Aus wirtschaftlichen Erwägungen beträgt die Konzentration der Monomeren in den Lösemitteln üblicherweise 10 bis 40, vorzugsweise 15 bis 35 Gew.%. Der Monomerengehalt entspricht dem Polymerisatgehalt der bei der Polymerisation entstehenden Polymerisatlösung. Sofern man ein organisches Lösemittel bei der Polymerisation mitverwendet oder in Sonderfällen auch während der Polymerisation durchgeführt hat, so kann man die organischen Lösemittel abdestillieren und durch Zufügen von Wasser wäßrige Polymerlösungen herstellen.

Die Polymerisation kann gegebenenfalls in Gegenwart von üblichen Polymerisationsreglern vorgenommen werden. Geeignete Regler sind beispielsweise Mercaptoethanol, Mercaptopropanol, Mercaptobutanol, Dodecylmercaptan, Thioglycolsäure, sec. Butenol, halogenhaltige Verbindungen wie z.B. Tetrachlorkohlenstoff, Tetrabromkohlenstoff, Bromal u.a. oder Amine, wie z.B. Hydroxylamin.

Die Regler werden, bezogen auf die bei der Polymerisation eingesetzten Monomeren, beispielsweise in Mengen bis zu 2 Gew.% verwendet. Die gemäß Erfindung zu verwendenden wasserlöslichen Polymerisate haben ein mittleres Molekulkargewicht (Gewichtsmittel) von 5.000 bis 600.000, vorzugsweise 10 000 bis 200 000. Die Glastemperatur $T_g$ der Homo- und Copolymerisate liegt unterhalb von 40°C, beispielsweise in dem Bereich von -34 bis +26°C, vorzugsweise -21 bis -9°C. Derartige Polymerisate bilden bereits bei Temperaturen von 20°C oder darunter Filme.

Sofern die Polymerisate saure Gruppen enthalten, beträgt der Neutralisationsgrad der sauren Gruppen bis maximal 75 %. Um besonders lagerstabile wäßrige Lösungen der Polymerisate zu erhalten, werden Polymerlösungen mit pH-Werten von weniger als 2 auf einen pH-Wert von vorzugsweise 2 bis 5 eingestellt. Die Einstellung des pH-Werts der stärker sauren wäßrigen Lösungen erfolgt durch Neutralisation der Polymerisate, die saure Gruppen enthalten, mit Basen, z.B. Natronlauge, Kalilauge, Ammoniak oder Aminen. Aus vollständig neutralisierter Polyacrylsäure können durch Zugabe von Salzsäure oder Schwefelsäure zu wäßrigen Lösungen und Einstellen des pH-Werts auf 2 bis 5 keine als Klebstoff brauchbaren wäßrigen Lösungen hergestellt werden, weil der Gehalt an Neutralsalzen bei der Anwendung stört. Man verwendet daher vorzugsweise salzfreie bzw. elektrolytarme wäßrige Lösungen der Polymerisate. Sofern die Polymerisatlösungen einen höheren Gehalt an Neutralsalzen (Elektrolyten) aufweisen, müssen diese Lösungen in geeigneter Weise von Neutralsalzen befreit werden, z.B. durch Membranfiltration oder umgekehrte Osmose. Der Elektrolytgehalt der Lösungen liegt vorzugsweise unterhalb von 1,5 Mol.%, bezogen auf einwertige Kationen und das gesamte Polymerisat.

Die oben beschriebenen wäßrigen Polymerisatlösungen, können direkt als Kaschierkleber bei der Herstellung von Verbundmaterialien, insbesondere von Verbundfolien, eingesetzt werden. Die Anwendung der Kaschierkleber kann beispeilsweise auf Kaschiermaschinen in der Weise vorgenommen werden, daß man auf eine Trägerfolie aus einem Kunststoff, einem Metall oder Papier eine wäßrige Lösung des Kaschierklebers aufträgt. Sofern bahnförmige Materialien als Trägerfolie verwendet werden, wird die Lösung des Kaschierklebers üblicherweise aus einer Wanne aufgetragen und mit Hilfe einer Luftbürste egalisiert. Eine andere Möglichkeit, den Kaschierkleber auf die Trägerfolie aufzubringen, gelingt in eleganter Weise mit Hilfe des Reverse Gravure-Verfahrens. Die auf die flächigen Materialien aufgetragenen Mengen an Polymerisaten betragen 2 bis 10, vorzugsweise 3 bis 7 g/m². Nach dem Aufbringen der wäßrigen Lösung der Polymerisate auf die flächigen Substrate wird zunächst ein Teil des Wassers der wäßrigen Lösung verdampft. Hierfür kann man beispielsweise bei kontinuierlichem Arbeiten die Trägerfolie durch einen Trockenkanal führen, der mit einer Ultrarot-Bestrahlungsvorrichtung ausgestattet ist. Danach wird zur Herstellung von Verbundfolien eine Deckfolie auf die mit der getrockneten Kleberschicht versehene Unterlage in Kontakt gebracht und darauf aufgepreßt. Die Deckfolie wird dabei vorzugsweise auf die noch vom Trocknungsvorgang her heiße, beschichtete Trägerfolie aufgepreßt. Um eine gute Haftung zu erreichen, kann man die Deckfolie vorher einer Korona-Behandlung unterwerfen. Die mit dem Kaschierkleber beschichtete Trägerfolie und die Deckfolie werden vorzugsweise in dem Temperaturbereich von 20 bis 90°C bei einem Liniendruck bis zu 10 bar miteinander in Kontakt gebracht und zu einem Folienverbund zusammengepreßt.

Nach dem beschriebenen Verfahren lassen sich in einfacher Weise Folienverbunde aus orientierter Polypropylenfolie und einer Folie aus Polyethylen herstellen, wobei das Polyethylen sowohl nach dem Hochdruck als auch nach dem Niederdruck Polymerisationsverfahren von Ethylen hergestellt worden sein kann. Sofern man auf eine besonders gute Heißsiegelbarkeit des Folienverbundes Wert legt, verwendet man als Deckfolie vorzugsweise nach dem Hochdruckpolymerisationsverfahren von Ethylen erhaltenes Polyethylen. Andere geeignete Trägerfolien sind beispielsweise Folien aus Polyester, wie Polyethylenterephthalat, Folien aus Polyamid, Polystyrol und Polyvinylchlorid. Als Trägerfolien eignen sich außerdem Papiere und Metallfolien, wie Aluminiumfolien. Die Dicke der Trägerfolien liegt im allgemeinen in dem Bereich von 10 bis 200 μm, sie beträgt beispielsweise bei Folien aus orientiertem Polypropylen 20 bis 40 μm, bei Folien aus Polyamid 30 bis 50 μm, bei Folien aus Polyethylenterephthalat 10 bis 40 μm, bei Folien aus Polyvinylchlorid ca. 200 μm und bei Folien aus Polystyrol etwa 20 μm. Zur Herstellung von besonders gas- und feuchtigkeitsundurchlässiger Folienverbunde werden die erfindungsgemäß als Kaschierkleber zu verwendeten Polymerisate auf Trägerfolien aufgetragen, die bereits mit einer üblichen wäßrigen Dispersion auf Basis von Polyvinylidenchlorid beschichtet sind. Der Gehalt an einpolymerisiertem Vinylidenchlorid der Polyvinylidenchloriddispersion liegt dabei zwischen etwa 80 und 92 Gew.%. Dispersionen dieser Art sind handelsübliche Produkte.

Gegenüber den bisher verwendeten Kaschierklebern auf Basis von Acrylesterdispersionen, Polyvinylidenchloriddispersionen und Polyvinylalkohollösungen erreicht man mit den erfindungsgemäß zu verwendenden wasserlöslichen Homo- und Copolymerisaten eine höhere Verbundfestigkeit von Trägerschicht und Deckschicht bei den Verbundfolien sowie überraschenderweise eine stark verminderte Sauerstoffdurchlässigkeit des trockenen Folienverbundes. Es war nicht zu erwarten, daß mit den erfindungsgemäß zu verwendenden Polymerisaten Folienverbunde mit sogenannten hohen Barriereeigenschaften herstellbar sind, d.h. Folienverbunde, die insbesondere eine sehr niedrige Sauerstoffpermeabilität im trockenen Zustand aufweisen. Die mit Hilfe der erfindungsgemäß einzusetzenden Kaschierkleber (Kaschiermittel) erhältlichen Folienverbunde haben bei gleicher Schichtdicke des Klebers eine niedrigere Sauerstoffpermeabilität (trocken) als Verbunde, die mit Hilfe von Kaschierklebern auf Basis Polyvinylidenchlorid erhältlich sind.

Die erfindungsgemäß zu verwendenden Polymerisate können auch zur Herstellung von Klebstofformulierungen als lösungsmittelfreie Weichkomponente verwendet werden. Hierdurch können die Balsamharzlösungen ganz oder teilweise ersetzt werden. Ferner sind sie geeignet als klebrigmachende Zusätze zu natürlichen Klebstoffen wie z.B. Casein. Durch diese Zusätze läßt sich die Haftung auf polaren und nicht polaren Untergründen verbessern.

Die Molekulargewichte als Gewichtsmittel wurden nach W. Wunderlich, Angew. Makromolekulare Chemie, Band 11, 189 bis 199 (1970) aus dem Staudinger-Index [η] berechnet.

Die Glastemperatur $T_g$ wurde in Anlehnung an ASTM-D3418-82 mit einem Gerät von Mettler (TA3000, Meßzelle DSC30) bei einer Aufheizgeschwindigkeit von 20°C/min bestimmt. Der jeweils angegebene Wert wurde nach dem ersten Aufheizen bis maximal 120°C abgelesen, wobei der Wendepunkt angegeben wurde.

Die Verbundfestigkeit wurde in Anlehnung an DIN 53282 bestimmt. Der Prüfkörper hatte eine Breite von 1,5 cm und eine Länge von ca. 3,5 cm. Vor der Messung wurden die Proben 24 Stunden im Klimaraum bei 23°C und 50 % relativer Luftfeuchte gelagert. Die Festigkeit wurde mit einer Reißmaschine der Firma Frank bestimmt. Die Abzugsgeschwindigkeit betrug 15 cm/min, gerissen wurde unter einem Winkel von 90°C. Die gerissene Strecke betrug jeweils 2,5 cm. Es wurden mindestens 5 gleiche Proben hintereinander gemessen. Angegeben wurden der Anrißwert und die mittlere Weiterreißfestigkeit längs und quer zur Bahnrichtung.

Die Sauerstoff-Permeabilität wurde an Beschichtungen auf orientierter Polypropylenfolie in Anlehnung an ASTM D 3985-81 bei 23°C und 0 % relativer Feuchte bestimmt. Dabei wird zunächst die Sauerstoffdurchlässigkeit in $cm^3/m^2 \cdot d \cdot bar$ bestimmt, die dann auf eine Schichtdicke von 100 μm umgerechnet und als Sauerstoff-Permeabilität in $cm^3 \cdot 100$ μm/$m^2 \cdot d \cdot bar$ angegeben wird.

Folgende Copolymerisate wurden hergestellt:

Copolymerisat 1

Ein 2 l fassender 4-Halsrundkolben, der mit 2 Zulaufgefäßen, Rührer, Thermometer und Rückflußkühler ausgestattet ist, wird mit 650 g Wasser beschickt. Das eine Zulaufgefäß enthält eine Monomerenmischung aus 25 g Hydroxyethylacrylat und 225 g Acrylsäure. Das andere Zulaufgefäß enthält eine Lösung von 10 g Natriumperoxidisulfat in 100 g Wasser. Das im Kolben vorgelegte Wasser wird unter Rühren auf 85°C erhitzt. Sobald diese Temperatur erreicht ist, gibt man die in den beiden Zulaufgefäßen enthaltenen Lösungen gleichzeitig im Verlauf von 2 Stunden in das Reaktionsgefäß zu. Danach wird das Reaktionsgemisch noch 2 Stunden bei 85°C gerührt und anschließend abgekühlt. Man erhält eine wäßrige Polymerlösung mit einem Feststoffgehalt von 24,9 Gew.%. Das Copolymerisat hat eine Glastemperatur von 24°C ein Molekulargewicht von 130 000 und enthält 10 % Hydroxyethylacrylat und 90 % Acrylsäure einpolymerisiert.

5

Copolymerisat 2

Man arbeitet wie bei der Herstellung von Copolymerisat 1 beschrieben, legt jedoch nur 600 g Wasser vor und verwendet als Zulauf I eine Mischung aus 180 g Hydroxyethylacrylat und 120 g Acrylsäure und als Zulauf II eine Lösung von 6 g Natriumperoxidisulfat in 100 g Wasser. Man erhält eine wäßrige Polymerlösung mit einem Feststoffgehalt von 29,8 Gew.%. Das Copolymerisat enthält 60 % Hydroxyethylacrylat und 40 % Acrylsäure einpolymerisiert, hat eine Glastemperatur von -4°C und ein Molekulargewicht (Gewichtsmittel) von 112 500.

Copolymerisat 3

Man verfährt wie bei der Herstellung von Copolymerisat 1 beschrieben, legt 575 g Wasser vor und verwendet als Monomerenzulauf eine Mischung aus 175 g Hydroxypropylacrylat und 150 g einer 50 %igen wäßrigen Acrylamidlösung. Als Initiator wird eine Lösung von 5 g Natriumperoxidisulfat in 100 g Wasser eingesetzt. Man erhält eine wäßrige Polymerisatlösung mit einem Feststoffgehalt von 25,2 Gew.%. Das Copolymerisat enthält 70 % Hydroxypropylacrylat und 30 % Acrylamid in polymerisierter Form, hat eine Glastemperatur von 20°C und ein Molekulargewicht von 96 500.

Copolymerisat 4

Man verfährt wie bei der Herstellung von Copolymerisat 1 beschrieben, legt jedoch 700 g Wasser vor und verwendet als Monomerzulauf eine Mischung aus 160 g Acrylsäure, 20 g Hydroxyethylacrylat und 20 g Methylacrylat. Der andere Zulauf besteht aus einer Lösung von 4 g Natriumperoxidisulfat in 100 g Wasser. Man erhält eine wäßrige Polymerisatlösung vom Feststoffgehalt 19,7 Gew.%. Das Copolymerisat besteht aus 10 % Hydroxyethylacrylat, 80 % Acrylsäure und 10 % Methylacrylat in polymerisierter Form, hat eine Glastemperatur von 23°C und ein Molekulargewicht von 60 200.

Copolymerisat 5

Man arbeitet wie bei der Herstellung von Copolymerisat 1 beschrieben, legt jedoch 700 g Wasser vor und verwendet einen Monomerenzulauf aus einer Mischung von 170 g Acrylsäure, 20 g Hydroxyethylacrylat und 10 g Acrylnitril. Der andere Zulauf besteht aus einer Lösung von 4 g Natriumperoxidisulfat in 100 g Wasser. Man erhält nach der im Beispiel 1 angegebenen Vorschrift eine wäßrige Polymerlösung mit einem Feststoffgehalt von 19,8 Gew.%. Das Copolymerisat enthält 10 % Hydroxyethylacrylat, 85 % Acrylsäure und 5 % Acrylnitril einpolymerisiert hat eine Glastemperatur von 25°C und ein Molekulargewicht von 83 400.

Copolymerisat 6

Man verfährt wie bei der Herstellung von Copolymerisat 1 beschrieben und gibt zu der Vorlage von 650 g Wasser einen Monomerenzulauf aus 12,5 g Hydroxyethylacrylat, 162,5 g Acrylsäure und 75 g Vinylacetat. Der andere Zulauf besteht aus einer Lösung von 5 g Natriumperoxidisulfat in 100 g Wasser. Man erhält eine wäßrige Polymerisatlösung mit einem Feststoffgehalt von 24,8 %. Das wasserlösliche Copolymerisat enthält 5 % Hydroxyethylacrylat, 65 % Acrylsäure und 30 % Vinylacetat einpolymerisiert, hat eine Glastemperatur von 25°C und ein Molekulargewicht von 173 000.

Copolymerisat 7

Man arbeitet wie bei der Herstellung von Copolymerisat 1 beschrieben, legt jedoch 700 g Wasser vor und verwendet einen Monomerenzulauf aus 20 g Hydroxyethylacrylat, 150 g Acrylsäure, 20 g Vinylacetat und 10 g Ethylacrylat. Der andere Zulauf besteht aus einer Lösung von 4 g Natriumperoxidisulfat in 100 g Wasser. Man erhält eine wäßrige Polymerlösung mit einem Feststoffgehalt von 19,.7 %. Das Copolymerisat enthält - jeweils in polymerisierter Form - 10 % Hydroxyethylacrylat, 75 % Acrylsäure, 10 % Vinylacetat und 5 % Ethylacrylat, hat eine Glastemperatur von 23°C und ein Molekulargewicht von 60 500.

Copolymerisat 8

Man arbeitet wie bei der Herstellung von Copolymerisat 1 beschrieben, legt jedoch 575 g Wasser vor und verwendet einen Monomerenzulauf aus 50 g Hydroxyethylacrylat, 100 g Acrylsäure, 25 g Methylacrylat und 150 g einer 50 %igen wäßrigen Lösung von Acrylamid. Der andere Zulauf besteht aus einer Lösung von 5 g Natriumperoxidisulfat in 100 g Wasser. Man erhält eine wäßrige Polymerlösung mit einem Feststoffgehalt von 24,6 %. Das wasserlösliche Copolymerisat enthält - jeweils in polymerisierter Form20 % Hydroxyethylacrylat, 40 % Acrylsäure, 10 Methylacrylat und 30 % Acrylamid. Es hat eine Glastemperatur von 26°C und ein Molekulargewicht von 104 500.

Copolymerisat 9

Man arbeitet wie bei der Herstellung von Copolymerisat 1 beschrieben, legt jedoch 700 g Wasser vor. Der Zulauf besteht aus einer Monomerenmischung aus 190 g Hydroxyethylacrylat und 10 g Acrylnitril. Das andere Zulaufgefäß enthält den Polymerisationsinitiator, der aus einer Lösung von 4 g Natriumperoxidisulfat in 100 g Wasser besteht. Man erhält auf diese Weise eine wäßrige Polymerisatlösung mit einem Feststoffgehalt von 19,8 Gew.%. Das Copolymerisat enthält 95 % Hydroxyethylacrylat und 5 % Acrylnitril in polymerisierter Form, hat eine Glastemperatur von -19°C und ein Molekulargewicht von 441 300.

Copolymerisat 10

Man verfährt wie bei der Herstellung von Copolymerisat 9 angegeben, legt jedoch nur 650 g Wasser vor und verwendet einen Monomerenzulauf aus 225 g Hydroxyethylacrylat, 12,5 g Vinylacetat und 12,5 g Methylacrylat. Der andere Zulauf enthält eine Lösung von 8 g Natriumperoxidisulfat in 100 g Wasser. Die wäßrige Polymerlösung hat einen Feststoffgehalt von 25,2 %. Man erhält ein Copolymerisat, das 90 % Hydroxyethylacrylat, 5 % Vinylacetat und 5 % Methylacrylat in polymerisierter Form enthält. Die Glastemperatur des Copolymerisats beträgt -19°C, das Molekulargewicht 8 700.

Copolymerisat 11

Man verfährt wie bei der Herstellung von Copolymerisat 9 beschrieben, legt jedoch 600 g Wasser vor und verwendet als Monomerzulauf eine Mischung aus 255 g Hydroxyethylacrylat und 45 g Acrylsäure. Der andere Zulauf besteht aus einer Lösung von 6 g Natriumperoxidisulfat in 100 g Wasser. Man erhält eine wäßrige Polymerlösung mit einem Feststofgehalt von 30 %. Das Copolymerisat enthält, jeweils in polymerisierter Form, 85 % Hydroxyethylacrylat und 15 % Acrylsäure. Es hat eine Glastemperatur von -21°C und ein Molekulargewicht von 34 300.

Copolymerisat 12

Man verfährt wie bei der Herstellung von Copolymerisat 9, legt jedoch nur 650 g Wasser und verwendet einen Monomerenzulauf aus 225 g Hydroxyethylacrylat, 12,5 g Acrylnitril und 12,5 g Acrylsäure. Der andere Zulauf besteht aus einer Lösung von 10 g Natriumperoxidisulfat in 100 g Wasser. Man erhält eine wäßrige Polymerlösung mit einem Feststofgehalt von 25,2 %. Das Copolymerisat enthält - jeweils in einpolymerisierter Form - 90 % Hydroxyethylacrylat, 5 % Acrylnitril und 5 % Acrylsäure. Es hat eine Glastemperatur von -15°C und ein Molekulargewicht von 15 200.

Copolymerisat 13

Man verfährt wie bei der Herstellung von Copolymerisat 9 angegeben, legt jedoch 690 g Wasser vor und verwendet einen Monomerenzulauf aus 180 g Hydroxyethylacrylat, 10 g Vinylpropionat und 10 g Methacrylsäure. In dem anderen Zulaufgefäß ist eine Lösung von 4 g Natriumperoxidisulfat in 100 g Wasser. Man erhält eine Polymerlösung mit einem Feststoffgehalt von 20,3 %. Das wasserlösliche Copolymerisat enthält - jeweils in einpolymerisierter Form - 90 % Hydroxyethylacrylat, 5 % Vinylpropionat und 5 % Methacrylsäure. Es hat eine Glastemperatur von -14°C und ein Molekulargewicht von 12 500.

Copolymerisat 14

Man verfährt wie bei der Herstellung des Copolymerisats 9 angegeben, legt jedoch 680 g Wasser vor und verwendet einen Monomerenzulauf aus einer Mischung aus 180 g Hydroxyethylacrylat, 10 g Methylmethacrylat und 20 g einer 50 %igen wäßrigen Lösung von Acrylamid. Der andere Zulauf besteht aus einer Lösung von 4 g Natriumperoxidisulfat in 100 g Wasser. Man erhält eine wäßrige Polymerlösung mit einem Feststofgehalt von 20,8 %. Das Copolymerisat enthält - jeweils in einpolymerisierter Form - 90 % Hydroxyethylacrylat, 5 g Methylmethacrylat und 5 g Acrylamid. Es hat eine Glastemperatur von -9°C und ein Molekulargewicht von 17 700.

Copolymerisat 15

Man verfährt wie bei der Herstellung von Copolymerisat 9 angegeben, legt jetzt jedoch 930 g Waser vor und verwendet einen Monomerenzulauf aus einer Mischung aus 212,5 g Hydroxyethylacrylat, 12,5 g Methlacrylat, 12,5 g Vinylacetat und 12,5 g Acrylsäure. Der andere Zulauf besteht aus einer wäßrigen Lösung von 7,5 g Natriumperoxidisulfat in 100 g Wasser. Man erhält eine wäßrige Polymerlösung mit einem Feststoffgehalt von 19,6 %. Das wasserlösliche Copolymerisat enthält 85 % Hydroxyethylacrylat, 5 % Acrylsäure, 5 % Methylacrylat und 5 % Vinylacetat einpolymerisiert, hat eine Glastemperatur von -17°C und ein Molekulargewicht von 7 400.

Polymerisat 16

Homopolymerisat der Acrylsäure mit einem Molekulargewicht von 72 000 und einer Glastemperatur von 15°C. Es wird als 19,9 %ige wäßrige Lösung mit einem pH-Wert von 1,4 verwendet.

Polymerisat 17

Homopolymerisat von Hydroxyethylacrylat mit einem Molekulargewicht von 126 000, einer Glastemperatur von -34°C. Es wird als 24,8 %ige wäßrige Lösung mit einem pH-Wert von 2,0 als Kaschierkleber verwendet.

Beispiele 1 - 17

Eine Trägerfolie aus orientiertem Polypropylen einer Stärke von 25 µm wurde in den einzelnen Beispielen jeweils mit einer wäßrigen Lösung der oben beschriebenen Polymerisate 1 bis 17 beschichtet. Die jeweils verwendeten Auftragsmengen an festem Polymerisat sind in der folgenden Tabelle angegeben. Die mit der wäßrigen Lösung beschichteten Folien wurden danach jeweils bei 75°C getrocknet und bei einer Temperatur von 50°C mit einer Deckfolie aus Polyethylen, das nach dem Hochdruckpolymerisationsverfahren hergestellt wurde, zu einer Verbundfolie verarbeitet. Die Polyethylenfolie war vorher einer Corona-Behandlung unterworfen worden. Die Verbundfestigkeit der Verbundfolien wurde durch Bestimmung des Anrißwerts und des Weiterreißwerts bestimmt. Außerdem wurde die Permeabilität für Sauerstoff im trockenen Zustand bestimmt. Die prozentuale Zusammensetzung der Polymerisate, der pH-Wert der eingesetzten wäßrigen Polymerlösungen, das Auftragsgewicht der Polymerisate sowie die Eigenschaften der Verbundfolien sind in der Tabelle angegeben.

Vergleichsbeispiel

Das wäßrige Lösungspolymerisat vom Beispiel 1 wurde mit 10 %iger Natronlauge auf einen pH-Wert von 8 gestellt. Genau wie bei den Beispielen 1 - 17 angegeben wurde ein Folienverbund hergestellt. Der Auftrag betrug 5,7 g/m².
Anrißwert L < 0,5, Q = 1,75 N/15 mm
Weiterreißwert L < 0,5, Q = 1,0 N/15 mm
$P_{O_2}$ = 0,03 cm3 · 100 µm/m² · d · bar. Die Verbundfestigkeiten solcher Folienverbunde sind nicht ausreichend.

Tabelle

| Beispiel Nr. | Zusammensetzung der Polymerisate [%] | pH-Wert der wäßrigen Polymerlösungen | Auftrag [g/m²] | Verbundfestigkeit [N/15 mm] | | | | Permeabilität für $O_2$ [cm³ · 100 µm/ m² · d · bar] |
| | | | | Anrißwert | | Weiterreißwert | | |
| | | | | L | Q | L | Q | |
| 1 | 90AS/10HEA | 1,6 | 5,1 | 2,55 | 3,65 | 1,95 | 3,5 | 0,03 |
| 2 | 40AS/60HEA | 1,9 | 4,85 | 3,4 | 4,1 | 2,8 | 3,6 | 0,08 |
| 3 | 30AM/70HPA | 2,6 | 4,15 | 1,45 | 3,05 | 0,75 | 0,95 | – |
| 4 | 80AS/10HEA/10MA | 1,6 | 6,4 | 2,5 | 3,45 | 2,1 | 2,85 | 0,04 |
| 5 | 85AS/10HEA/5AN | 1,5 | 6,05 | 1,2 | 2,5 | 0,75 | 1,65 | 0,09 |
| 6 | 65AS/5HEA/30VAC | 1,7 | 4,3 | 1,5 | 2,9 | 0,95 | 2,5 | 0,09 |
| 7 | 75AS/10HEA/10VAc/5EA | 2,0 | 5,5 | 2,9 | 4,75 | 2,1 | 7,6 | 0,11 |
| 8 | 40AS/20HEA/10MA/30AM | 2,1 | 4,3 | 2,0 | 2,7 | 1,5 | 2,4 | 0,10 |
| 9 | 95HEA/5AN | 2,1 | 4,85 | 3,4 | 3,7 | 2,0 | 3,2 | 2,10 |
| 10 | 90HEA/5MA/5VAc | 1,9 | 3,9 | 3,0 | 4,95 | 2,8 | 3,85 | 3,10 |
| 11 | 85HEA/15AS | 1,8 | 5,8 | 3,7 | 4,0 | 2,75 | 3,15 | 5,10 |
| 12 | 90HEA/5AN/5AS | 1,8 | 5,5 | 4,2 | 3,85 | 3,8 | 3,2 | 1,80 |
| 13 | 90HEA/5VPr/5MAS | 2,0 | 5,1 | 2,95 | 3,2 | 3,85 | 3,05 | 1,70 |
| 14 | 90HEA/5MMA/5AM | 2,0 | 5,25 | 4,0 | 3,0 | 3,2 | 2,8 | 1,90 |
| 15 | 85HEA/5MA/5VAc/5AS | 1,9 | 4,95 | 3,35 | 3,7 | 3,15 | 3,1 | 2,40 |
| 16 | 100AS | 1,4 | 5,0 | 2,15 | 3,25 | 1,85 | 2,6 | 0,03 |
| 17 | 100HEA | 2,0 | 6,0 | 3,7 | 3,5 | 3,4 | 3,1 | 1,8 |

Bedeutung der Abkürzungen:

| | | | | |
|---|---|---|---|---|
| AS | = Acrylsäure | | HPA | = Hydroxypropylacrylat |
| AM | = Acrylamid | | MA | = Methylacrylat |
| AN | = Acrylnitril | | VAc | = Vinylacetat |
| MAS | = Methacrylsäure | | VPr | = Vinylpropionat |
| HEA | = Hydroxyethylacrylat | | EA | = Ethylacrylat |

L = Verbund in Längsrichtung der Bahn gerissen

Q = Verbund quer zur Bahn gerissen

EP 0 344 589 B1

**Patentansprüche**

1. Verwendung von elektrolytarmen wäßrigen Lösungen wasserlöslicher Polymerisate, die durch Lösungspolymerisation von

(a) 100 bis 50 Gew.% Acrylsäure, Methacrylsäure, Hydroxyethylacrylat, Hydroxypropylacrylat oder deren Mischungen und

(b) 0 bis 50 Gew.% anderen, mit den Monomeren (a) copolymerisierbaren monoethylenisch ungesättigten Verbindungen

in wäßrigem Medium in Gegenwart von Radikale bildenden Polymerisationsinitiatoren bei pH-Werten von 1 bis 6 erhältlich sind und die ein mittleres Molekulargewicht (Gewichtsmittel) von 5 000 bis 600 000 und Glastemperaturen von -34 bis +26°C haben (bestimmt in Anlehnung an ASTM-D 3418-82 bei einer Aufheizgeschwindigkeit von 20°C/min nach dem ersten Aufheizen, wobei der Wendepunkt angegeben wurde), als Kaschierkleber zur Herstellung von flächigen Verbundmaterialien.

2. Verwendung nach Anspruch 1, dadurch gekennzeichnet, daß man die wasserlöslichen Polymerisate als Kaschierkleber zur Herstellung von Verbundfolien einsetzt.

3. Verwendung nach Anspruch 1 oder 2, dadurch gekennzeichnet, daß man durch Lösungspolymerisation von

(a) 100 bis 50 Gew.% Acrylsäure, Methacrylsäure, Hydroxyethylacrylat oder deren Mischungen und

(b) 0 bis 50 Gew.% Ester der Acrylsäure mit einem einwertigen $C_1$- bis $C_4$-Alkohol, Ester der Methacrylsäure mit einem einwertigen Alkohol, Vinylacetat, Vinylpropionat, Acrylamid, Methacrylamid, Acrylnitril, Methacrylnitril, N-Methylolacrylamid, $C_1$- bis $C_4$-Alkylether von N-Methylolacrylamid, N-Methylolmethacrylamid, $C_1$- bis $C_4$-Alkylether von N-Methylolmethacrylamid, 2-Acrylamido-2-methylpropansulfonsäure, Vinylsulfonsäure, Sulfoethylmethacrylat und deren Mischungen erhältliche wasserlösliche Polymerisate einsetzt.

4. Verwendung nach einem der Ansprüche 1 oder 2, dadurch gekennzeichnet, daß man wasserlösliche Homopolymerisate von Hydroxyethylacrylat, Acrylsäure oder Methacrylsäure einsetzt.

5. Verwendung nach einem der Ansprüche 1 oder 2, dadurch gekennzeichnet, daß man durch Lösungspolymerisation von

(a) Hydroxyethylacrylat, Acrylsäure, Methacrylsäure oder deren Mischungen und

(b) Methylacrylat, Ethylacrylat, Methylmethacrylat, Acrylamid, Methacrylamid, Acrylnitril oder deren Mischungen

in wäßrigem Medium erhältliche wasserlösliche Copolymerisate einsetzt.

**Claims**

1. Use of a low-electrolyte aqueous solution of a water-soluble polymer which is obtainable by solution polymerization of

(a) from 100 to 50% by weight of acrylic acid, methacrylic acid, hydroxyethyl acrylate, hydroxypropyl acrylate or a mixture of these and

(b) from 0 to 50% by weight of other monoethylenically unsaturated compounds copolymerizable with the monomer (a)

in aqueous medium at a pH of from 1 to 6 in the presence of a free radical polymerization initiator and which has a mean molecular weight (weight average) of from 5,000 to 600,000 and a glass transition temperature of from -34 to +26°C (determined similarly to ASTM-D 3418-82 at a heating rate of 20°C/min after the initial heating up, the point of inflection being stated), as a laminating adhesive for the production of a sheet-like laminate.

2. Use as claimed in claim 1, which comprises employing a water-soluble polymer as a laminating adhesive for the production of laminated films.

3. Use as claimed in claim 1 or 2, which comprises employing a water-soluble polymer which is obtainable by solution polymerization of

(a) from 100 to 50% by weight of acrylic acid, methacrylic acid, hydroxyethyl acrylate or a mixture of these and

(b) from 0 to 50% by weight of an ester of acrylic acid with a monohydric $C_1$-$C_4$-alcohol, an ester of methacrylic acid with a monohydric alcohol, vinyl acetate, vinyl propionate, acrylamide, methacrylamide, acrylonitrile, methacrylonitrile, N-methylolacrylamide, a $C_1$-$C_4$-alkyl ether of N-methylolacrylamide, N-methylolmethacrylamide, a $C_1$-$C_4$-alkyl ether of N-methylolmethacrylamide, 2-acrylamido-2-methylpropanesulfonic acid, vinylsulfonic acid, sulfoethyl methacrylate or a mixture of these
in aqueous medium.

4. Use as claimed in either of claims 1 and 2, which comprises employing a water-soluble homopolymer
of hydroxyethyl acrylate, acrylic acid or methacrylic acid.

5. Use as claimed in either of claims 1 and 2, which comprises employing a water-soluble copolymer obtainable by solution polymerization of

(a) hydroxyethyl acrylate, acrylic acid, methacrylic acid or a mixture of these and

(b) methyl acrylate, ethyl acrylate, methyl methacrylate, acrylamide, methacrylamide, acrylonitrile or a
mixture of these

in aqueous medium.


**Revendications**

1. Utilisation de solutions aqueuses pauvres en électrolyte de polymères solubles dans l'eau, que l'on peut
obtenir par la polymérisation en solution de

(a) 100 à 50% en poids d'acide acrylique, d'acide méthacrylique, d'acrylate d'hydroxyéthyle, d'acrylate
d'hydroxypropyle, ou de leurs mélanges et

(b) 0 à 50% en poids d'autres composés à insaturation monoéthylénique, copolymérisables avec des
monomères (a),

en milieu aqueux et en présence d'amorceurs de polymérisation qui engendrent des radicaux, à des valeurs
de pH de 1 à 6 et qui possèdent un poids moléculaire moyen (moyenne en poids) de 5 000 à 600 000 et des
températures de transition vitreuse de -34 à +26°C (déterminées selon la norme ASTM-D 3418-82 à une
vitesse de chauffe de 20°C/min après le premier chauffage, où le point d'inflexion fut indiqué), à titre de colles
de contrecollage ou de stratification pour la fabrication de matériaux stratifiés plats.

2. Utilisation suivant la revendication 1, caractérisée en ce que l'on utilise les polymères solubles dans l'eau
à titre de colles de contrecollage ou de stratification pour la fabrication de feuilles stratifiées ou lamifiées.

3. Utilisation suivant la revendication 1 ou 2, caractérisée en ce que l'on met en oeuvre des polymères
solubles dans l'eau, que l'on peut obtenir par la polymérisation en solution de

(a) 100 à 50% en poids d'acide acrylique, d'acide méthacrylique, d'acrylate d'hydroxyéthyle ou de leurs
mélanges et

(b) 0 à 50% en poids d'esters de l'acide acrylique avec un alcool monohydroxylé en $C_1$ à $C_4$, d'esters de
l'acide méthacrylique avec un alcool monohydroxylé, d'acétate de vinyle, de propionate de vinyle, d'acrylamide, de méthacrylamide, d'acrylonitrile, de méthacrylonitrile, de N-méthylolacrylamide, d'éthers alkyliques en $C_1$ à $C_4$ du N-méthylolacrylamide, de N-méthylolméthacrylamide, d'éthers alkyliques en $C_1$ à $C_4$
du N-méthylolméthacrylamide, d'acide 2-acrylamido-2-méthylpropanesu1fonique, d'acide vinylsulfonique,
de méthacrylate de sulfoéthyle et de leurs mélanges.

4. Utilisation suivant l'une quelconque des revendications 1 et 2, caractérisée en ce que l'on met en oeuvre
des homopolymères solubles dans l'eau de l'acrylate d'hydroxyéthyle, de l'acide acrylique, ou de l'acide méthacrylique.

5. Utilisation suivant l'une quelconque des revendications 1 et 2, caractérisée en ce que l'on met en oeuvre
des copolymères solubles dans l'eau, que l'on peut obtenir par la polymérisation en solution de

(a) l'acrylate d'hydroxyéthyle, l'acide acrylique, l'acide méthacrylique, ou leurs mélanges et

(b) l'acrylate de méthyle, l'acrylate d'éthyle, le méthacrylate de méthyle, l'acrylamide, le méthacrylamide,
l'acrylonitrile, ou leurs mélanges,

en milieu aqueux.